# EUROPÄISCHE PATENTANMELDUNG

(11) **EP 3 154 142 A1**
(43) Veröffentlichungstag der Anmeldung: **12.04.2017**
(21) Anmeldenummer: 16002157.2
(22) Anmeldetag: 06.10.2016
(51) Int. Cl.: H02G 3/32

(54) **VERBINDUNGSVORRICHTUNG ZUM FESTLEGEN VON FLEXIBLEN LEITUNGEN**

(30) Priorität: 06.10.2015 DE 102015012910
(71) Anmelder: Hilleke, Stefan, 58809 Neuenrade (DE); Nocke, Stefan, 6102 Malters (CH); Grüter, Josef-Urs, 6017 Ruswil (CH)
(72) Erfinder: Hilleke, Stefan, 58809 Neuenrade (DE); Nocke, Stefan, 6102 Malters (CH); Grüter, Josef-Urs, 6017 Ruswil (CH)
(74) Vertreter: Müller, Bernhard

(57) **Zusammenfassung**

Es wird eine Verbindungsvorrichtung 1 zum Festlegen von flexiblen Leitungen 2 an einem länglichen Träger 3 mit profiliertem Querschnitt beschrieben, die eine ersten Abschnitt, der mit dem Profil eines Trägers 3 in Eingriff bringbar ist, mindestens einen zweiten flexiblen, dehnbaren Abschnitt und einen dritten Abschnitt, der mit dem Profil des Trägers 3 in Eingriff bringbar ist, aufweist, wobei die Verbindungsvorrichtung 1 die flexible Leitung 2 an dem Träger 3 vollständig umschließen kann.

## Beschreibung

Die Erfindung betrifft eine Verbindungsvorrichtung zum Festlegen von flexiblen Leitungen, wie elektrischen Kabeln, an einem länglichen Träger mit profiliertem Querschnitt.

Solche Verbindungsvorrichtungen sind in Praxis unter dem Begriff "Kabelbinder" bekannt. Sie bestehen in der Hauptsache aus Kunststoff und können nach dem Verschließen meistens nicht zerstörungsfrei geöffnet werden. Werden diese Kabelbinder der Witterung ausgesetzt, besteht das Material aus einem "witterungsbeständigem Kunststoff', der in der Regel länger als 10 Jahre den Beanspruchungen standhält. Sind diese Kabelbinder deutlich länger der Witterung und vor allem der Sonne (UV-Strahlung) ausgesetzt, dann müssen Sie im Durchschnitt nach 12 Jahren ersetzt werden, andernfalls liegen die Kabel ansonsten am Boden oder, z.B. bei Anwendung von Solarkabeln, auf dem Dach, was nach den aktuell gültigen VDE Vorschriften nicht gestattet ist.

Bei anderen Anwendungen, z. B. bei der Befestigung von Kabeln an Bahnschienen, werden Metallklammern eingesetzt. Hierbei ist ein Teil der Klammer mit dem profilierten Träger, d. h. der Schiene, kraftschlüssig im Eingriff.

Nachteilig an solchen Verbindungselementen ist entweder das Material des Kabelbinders, das nicht dauerhaft die Verbindungsaufgabe löst, oder die spezielle Geometrie der Klammer, die nur für genau definierte Querschnitte, sowohl Trägerals auch Kabel- oder Leitungsquerschnitte, einsetzbar sind. Darüber hinaus sind die Klammern nicht geschlossen, so dass die Kabel leicht herausnehmbar sind, was z.B. bei einer Befestigung auf dem Dach unerwünscht wäre.

Schutzziel für die Leitungsführung ist laut VDE 0100-712: dauerhaft kurzschluss- und erdschlusssichere Verlegung und widerstandsfähig gegen die dort vorkommenden Umwelteinflüsse z.B. Ozon, UV-Strahlung, aber auch Temperatur. Diese Ziele werden mit Kabelbindern aus Kunststoff nicht erfüllt.

In der Regel muss ein Kabelbinder nach DIN bei starkem Zug auf das Kabel die Kabel in Längsrichtung freigeben, damit das Kabel nicht reißt und der Binder das Kabel in der Isolierung nicht beschädigt. Bei zu starkem Anziehen von Kabelbindern, geht diese notwendige Eigenschaft der Binder verloren. Ist erst einmal ein Binder zu stark angezogen kann dieser nicht mehr gelöst werden. Ein weiterer Nachteil liegt darin, dass Binder aus Kunststoff unter hoher Zugbelastung auch früher versagen.

Wenn nachträglich weitere Kabel an dem Träger verlegt werden, müssen diese mit zusätzlichen Bindern befestigt werden, da die bereits verbauten Binder nicht geöffnet werden können..

Bei konventionellen Bindern muss nach dem Zuziehen die überschüssige Lasche abgeschnitten werden, dieser Abfall landet häufig sogar in der Dachrinne anstatt im Müll.

Aufgabe der vorliegenden Erfindung ist es, eine Verbindungseinrichtung dieser Gattung bereit zu stellen, die eine schnelle, dauerhafte, geschlossene, flexible und lösbare Verbindung an einem profilierten Träger ermöglicht.

Im Rahmen von Entwicklungsarbeiten zur Lösung dieser Aufgabe wurde festgestellt, dass es besonders vorteilhaft ist, einen mittleren Abschnitt einer derartigen Befestigungsvorrichtung dehnbar auszugestalten und ferner Abschnitte, die am Anfang und am Ende der Befestigungsvorrichtung vorgesehen sind, so auszugestalten, dass sie mit dem Profil des Trägers in Eingriff gebracht werden können.

Gegenstand der Erfindung ist somit eine Verbindungsvorrichtung 1 zum Festlegen von flexiblen Leitungen 2 an einem länglichen Träger 3 mit profiliertem Querschnitt, wobei die Verbindungsvorrichtung 1 einen ersten Abschnitt 4, 4', einen sich daran anschließenden, flexiblen zweiten Abschnitt 5 und einen sich daran anschließenden dritten Abschnitt 6, 6' aufweist, dadurch gekennzeichnet,
- dass der erste Abschnitt 4 so ausgestaltet ist, dass er mit dem Profil des Trägers 3 in Eingriff bringbar ist,
- dass der flexible zweite Abschnitt 5 dehnbar ist, um sich an unterschiedliche flexible Leitungen 6 und unterschiedliche Profile des Trägers 3 anpassen zu können, und
- dass der dritte Abschnitt so ausgestaltet ist, dass er ebenfalls mit dem Profil des Trägers 3 in Eingriff bringbar ist,
so dass die Verbindungsvorrichtung 1 die flexible Leitung 2 an dem Träger vollständig umschließen kann.

Vorzugsweise ist der mindestens eine flexible, dehnbare zweite Abschnitt 5 aus Edelstahldraht ausgeführt, wobei insbesondere die Verwendung einer Federwendel in Betracht kommt.

Vorzugsweise ist am Ende des dritten Abschnitts 6 eine Handhabe vorgesehen, die beispielsweise als Öse oder als Haken 7 ausgestaltet ist. Auch am ersten Abschnitt 4, 4' kann eine derartige Handhabe vorgesehen sein.

Vorzugsweise ist der flexible zweite Abschnitt 5 in mindestens zwei flexible, miteinander verbundene Teile unterteilt, so dass sich die Teile des zweiten Abschnitts 5 jeweils über andere Seiten des Profils des Trägers 3 erstrecken können.

Vorzugsweise ist der erste Abschnitt 4 als Federwendel ausgeführt, so dass er mit dünnwandigen Stegen oder Federn des Profils des Trägers 3 in Eingriff bringbar ist, indem die Stege oder Federn zwischen den Windungen der Federwendel eingreifen.

Vorzugsweise ist der dritte Abschnitt 6, 6' hakenförmig ausgebildet, so dass er mit Nuten des Profils des Trägers 3 in Eingriff bringbar ist. Auch der erste Abschnitt 4, 4' kann hakenförmig ausgebildet sein.

Nachstehend werden bevorzugte Ausführungsformen der Erfindung unter Bezugnahme auf die Zeichnungen näher erläutert.
Fig. 1 a und Fig. 1b zeigen zwei Ausführungsformen der erfindungsgemäßen Verbindungsvorrichtung in montagebereitem Zustand.
Fig. 2 zeigt die Vorrichtung von Fig. 1 a nach Montage an einem Träger, wobei der Träger 3 und Kabel 2 im Querschnitt dargestellt sind.
Fig. 3 zeigt die Vorrichtung von Fig. 1b nach Montage an einem Träger, wobei der Träger 3 und Kabel 2 im Querschnitt dargestellt sind.

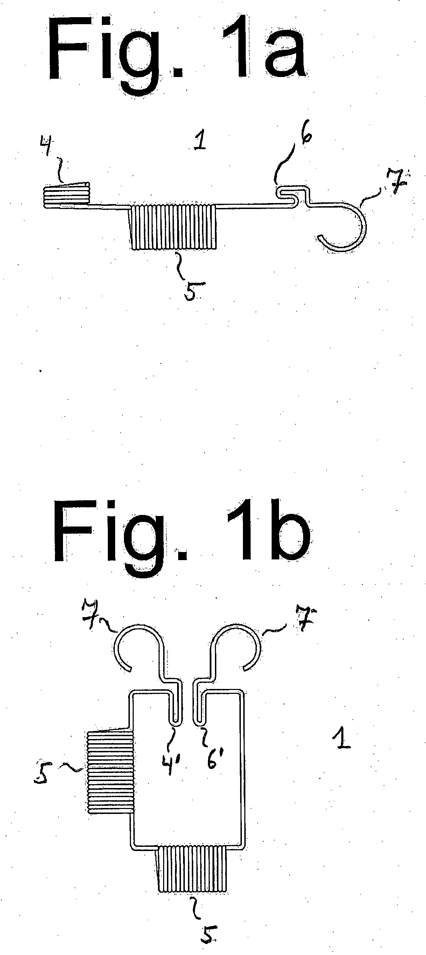

Die Vorrichtung von Fig. 1a weist einen ersten Abschnitt in Form einer Federwendel 4 auf. Daran schließt sich ein zweiter Abschnitt in Form einer Federwendel 5 an. Schließlich folgt der dritte, als Haken ausgebildete Abschnitt 6. Zur Erleichterung der Handhabung ist der dritte Abschnitt 6 mit einem Haken 7 versehen.

Die Vorrichtung von Fig. 1b weist einen ersten Abschnitt in Form eines Hakens 4' mit einem die Handhabung erleichternden Haken 7 auf. Daran schließen sich zwei zweite Abschnitte in Form einer Federwendel 5 an. Schließlich folgt der dritte, als Haken ausgebildete Abschnitt 6'. Zur Erleichterung der Handhabung ist der dritte Abschnitt 6' mit einem Haken 7 versehen.

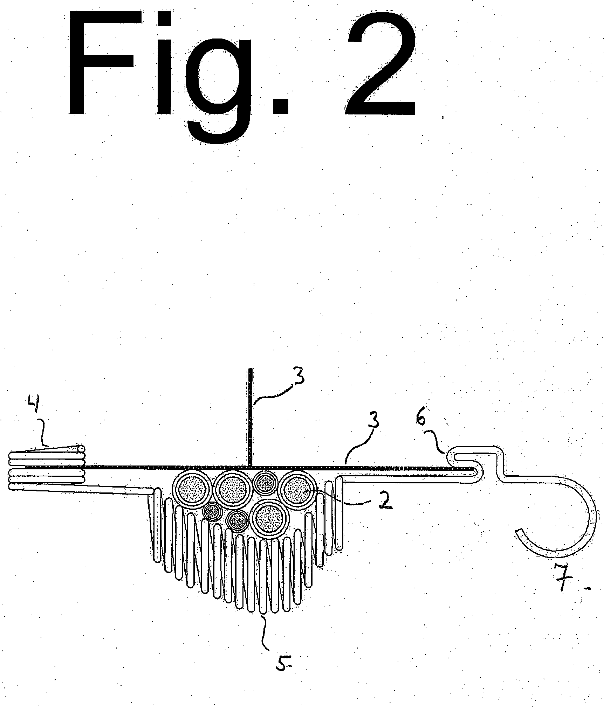

Aus Fig. 2 ist ersichtlich, wie die Vorrichtung gemäß Fig. 1 a mehrere Kabel 2 an einem Träger 3 festhält. Die Federwendel 4 des ersten Abschnitts steht im Eingriff mit einem dünnwandigen Steg des Trägers 3. Von der Federwendel 5 des zweiten Abschnitts werden Kabel 2 umschlossen und festgehalten. Der dritte Abschnitt in Form eines Hakens 6 ist in Eingriff mit einem weiteren dünnwandigen Steg des Trägers 3 gebracht, wobei ein Haken 7 als Handhabe vorgesehen ist.

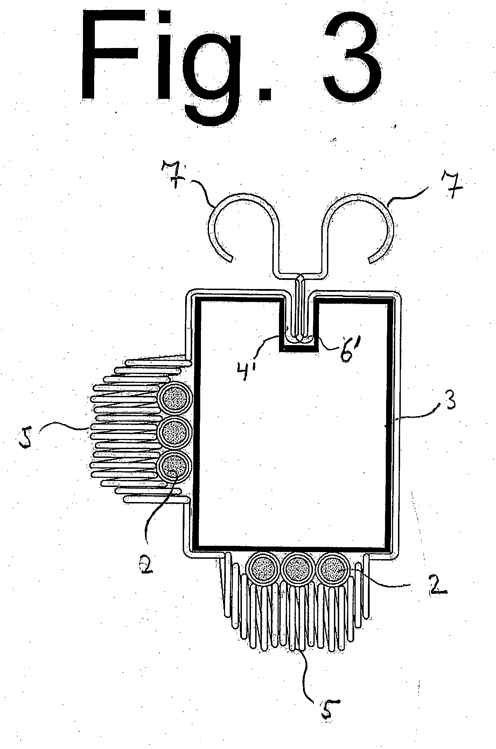

Aus Fig. 3 ist ersichtlich, wie die Vorrichtung gemäß Fig. 1b mehrere Kabel 2 an einem Träger 3 festhält. Die Besonderheit hier ist, dass zwei zweite flexible dehnbare Abschnitte in Form von Federwendeln 5 vorgesehen sind, die Kabel 2 an verschiedenen Seiten des Trägers 3 festhalten. Der als Haken 4' ausgebildete erste Abschnitt steht im Eingriff mit einer entsprechenden Ausnehmung des Trägers 3. Der dritte Abschnitt in Form eines Hakens 6' ist ebenfalls in Eingriff mit der Ausnehmung im Träger 3 gebracht, wobei ein Haken 7 als Handhabe vorgesehen ist.

Die erfindungsgemäße Verbindungsvorrichtung bietet unter anderem folgende Vorteile:
Die Ausführung als federähnliche Wicklungen erlaubt sehr unterschiedliche Befestigungen von verschiedensten Kabelquerschnitten mit einer Verbindungsvorrichtung. Auch ist es damit möglich, die Verbindungsvorrichtung an verschieden Geometrien zu befestigen und zu schließen.

Dadurch dass der dritte Abschnitt 6, 6' durch die Federwirkung des zweiten Abschnittes 5 immer unter Spannung steht, sind die Kabel immer federnd gelagert und können sich auch bei starkem Zug in eine Richtung verschieben, wie die DIN es fordert.

Dadurch dass der dritte Befestigungsabschnitt 6, 6' vorzugsweise als Haken ausgeführt ist kann man die Verbindungsvorrichtung jederzeit wieder lösen und nachträglich Kabel entfernen oder weitere Kabel hinzufügen.

Dadurch dass der erste Abschnitt 4, 4' als Federwicklung oder Haken ausgeführt ist kann man die erfindungsgemäße Verbindungsvorrichtung mit einer Hand einfach montieren und schließen, was bei Kabelbindern sehr schwierig oder nur mit besonderem Werkzeug möglich ist.

Dadurch dass vorzugsweise Edelstahldraht verwendet wird, ist die Verbindungseinrichtung dauerhaft auch gegen schwache Säuren und Laugen stabil und kann z.B. bei einer PV-Anlage auch mehrmals verwendet werden.

## Patentansprüche

1. Verbindungsvorrichtung (1) zum Festlegen von flexiblen Leitungen (2) an einem länglichen Träger (3) mit profiliertem Querschnitt, wobei die Verbindungsvorrichtung (1) einen ersten Abschnitt (4, 4'), einen sich daran anschließenden, flexiblen zweiten Abschnitt (5) und einen sich daran anschließenden dritten Abschnitt (6, 6') aufweist, **dadurch gekennzeichnet,**
• **dass** der erste Abschnitt (4, 4') so ausgestaltet ist, dass er mit dem Profil des Trägers (3) in Eingriff bringbar ist,
• **dass** der flexible zweite Abschnitt (5) dehnbar ist, um sich an unterschiedliche flexible Leitungen (2) und unterschiedliche Profile des Trägers (3) anpassen zu können, und
• **dass** der dritte Abschnitt (6, 6') so ausgestaltet ist, dass er ebenfalls mit dem Profil des Trägers (3) in Eingriff bringbar ist,
so dass die Verbindungsvorrichtung (1) die flexible Leitung (2) an dem Träger (3) vollständig umschließen kann.

2. Verbindungsvorrichtung (1) nach Anspruch 1, **dadurch gekennzeichnet, dass** der flexible, dehnbare zweite Abschnitt (5) aus Edelstahldraht ausgeführt ist.

3. Verbindungsvorrichtung (1) nach Anspruch 2, **dadurch gekennzeichnet, dass** der zweite Abschnitt als Federwendel ausgeführt sind.

4. Verbindungsvorrichtung (1) nach einem der Ansprüche 1 bis 3, **dadurch gekennzeichnet, dass** am Ende des dritten Abschnittes (6, 6') eine Handhabe ausgebildet ist.

5. Verbindungsvorrichtung (1) nach Anspruch 4, **dadurch gekennzeichnet, dass** die Handhabe ein Haken (7) oder eine Öse ist.

6. Verbindungsvorrichtung (1) nach einem der Ansprüche 1 bis 5, **dadurch gekennzeichnet, dass** der mindestens eine flexible zweite Abschnitt (5) in mindestens zwei flexibel, miteinander verbundene Teile unterteilt ist, so dass sich die Teile des zweiten Abschnitts (5) jeweils über andere Seiten des Profils des Trägers (3) erstrecken können.

7. Verbindungsvorrichtung (1) nach einem der Ansprüche 1 bis 6, **dadurch gekennzeichnet, dass** der erste Abschnitt als Federwendel ausgeführt ist, so dass er mit dünnwandigen Stegen oder Federn des Profils des Trägers (3) in Eingriff bringbar ist, indem die Stege oder Federn zwischen den Windungen der Federwendel eingreifen.

8. Verbindungsvorrichtung (1) nach einem der Ansprüche 1 bis 7, **dadurch gekennzeichnet, dass** der dritte Abschnitt (6, 6') hakenförmig ausgebildet ist, so dass er mit Nuten des Profils des Trägers (3)in Eingriff bringbar ist.
